# FASCICULE DE BREVET EUROPEEN

(11) **EP 0 423 003 B1**
(45) Date de publication et mention de la délivrance du brevet: **03.08.1994**
(21) Numéro de dépôt: 90402776.0
(22) Date de dépôt: 05.10.1990
(51) Int. Cl.: H05B 7/06

(54) **Dispositif de connexion électrique destiné à être placé en paroi d'un récipient métallurgique au contact d'un métal en fusion**
Elektrische Kontaktvorrichtung, welche in die Wand eines metallurgischen Gefässes in Kontakt mit einem geschmolzenen Metall angebracht werden soll
Electrical connecting device to be placed on the wall of a metallurgical vessel and in contact with a molten metal

(30) Priorité: 11.10.1989 FR 8913636
(43) Date de publication de la demande: 17.04.1991
(73) Titulaire: IRSID SA, F-92800 Puteaux (FR)
(72) Inventeur: Hamy, Michel, F-67000 Strasbourg (FR); Maurer, Ghislain, F-57160 Chatel Saint Germain (FR); Lebrun, Christian, F-59300 Valenciennes (FR); Grosjean, Jean-Claude, F-57000 Metz Sablon (FR)
(74) Mandataire: Martin, Jean-Paul

(56) Documents cités:
- EP-A- 0 044 512
- EP-A- 0 058 817
- EP-A- 0 133 931
- EP-A- 0 203 301
- EP-A- 0 309 583
- CH-A- 452 730
- FR-A- 2 437 760

## Description

La présente invention concerne un dispositif de connexion électrique destiné à être placé en paroi d'un récipient métallurgique et mis au contact, par l'une de ses extrémités, avec une masse métallique en fusion contenue dans le récipient, l'autre extrémité, qui dépasse à l'extérieur de la paroi du récipient est refroidie par un fluide et se trouve reliée à une borne d'une alimentation électrique.

Un dispositif de ce type, décrit dans le document FR-A-2566984, comporte un manchon en matériau bon conducteur de la chaleur tel que du cuivre, monté autour de l'extrémité proéminente et refroidi au contact d'un fluide en circulation. Les moyens de refroidissement du manchon décrits dans ce document sont constitués de préférence par au moins une cannelure ménagée sur la surface latérale externe du manchon, dans laquelle circule le fluide réfrigérant, et une chemise de fermeture de ladite cannelure, disposée autour du manchon, ladite chemise étant équipée de moyens d'entrée et de sortie de fluide qui sont reliés aux extrémités de la cannelure, et également connectés à une alimentation en fluide réfrigérant.

En alternative, les cannelures peuvent être remplacées par des canaux ménagés à l'intérieur du manchon, mais cette solution présente l'inconvénient de nécessiter un usinage délicat du manchon. Aussi la solution précédemment décrite reste-t-elle la solution préférée selon le document cité.

Une autre solution, décrite dans le document FR-A-2 621 994, consiste à ménager la ou les cannelures non plus dans le manchon, mais dans la surface latérale interne de la chemise. Le coût du manchon, qui ne doit plus être usiné, peut ainsi être réduit, sans affaiblir pour autant l'efficacité des moyens de refroidissement. L'usinage de la cannelure n'a donc plus à être réalisé qu'une seule fois dans une pièce qui ne s'use pas, ce qui diminue nettement le coût d'exploitation de l'électrode.

Le document EP-A-0.309.583 décrit une installation de refroidissement par aspersion d'une électrode de voûte en graphite pour four à arc, comportant des rampes de gicleurs d'aspersion de liquide directement sur l'électrode. Les conditions de fonctionnement d'une électrode de voûte sont très différentes de celles d'une électrode de sole ou de paroi, lesquelles sont en contact direct avec le métal liquide. En effet, une électrode de voûte ne nécessite normalement aucun refroidissement. En fait ce document propose de refroidir l'électrode pour réduire sa consommation par oxydation et pour limiter l'usure de ses potences de support et de la voûte.

Le but de l'invention est de proposer un mode de refroidissement du manchon permettant de simplifier la construction globale de l'électrode par rapport aux configurations qui viennent d'être décrites.

A cet effet, l'invention a pour objet un dispositif de connexion électrique, destiné à être placé en paroi d'un récipient ou four métallurgique contenant une masse métallique en fusion, dispositif comprenant :
- un corps métallique de forme allongée, destiné à être implanté au travers de la paroi du récipient de manière que l'une de ses extrémités soit mise au contact du métal en fusion et que l'autre extrémité constitue une partie terminale proéminente à l'extérieur du récipient et reliée à une borne d'une alimentation électrique ;
- un manchon en matériau bon conducteur de la chaleur, monté concentriquement à la partie terminale proéminente du corps;
- et des moyens de refroidissement du manchon par un fluide de refroidissement, tel que de l'eau ;

dispositif caractérisé en ce que lesdits moyens de refroidissement du manchon sont constitués par au moins une rampe de gicleurs projetant le fluide de refroidissement sur la paroi externe du manchon.

Comme on l'aura compris, l'invention consiste à assurer le refroidissement de l'électrode par simple projection de ce fluide sur le manchon, sans aucun confinement de la circulation du fluide.

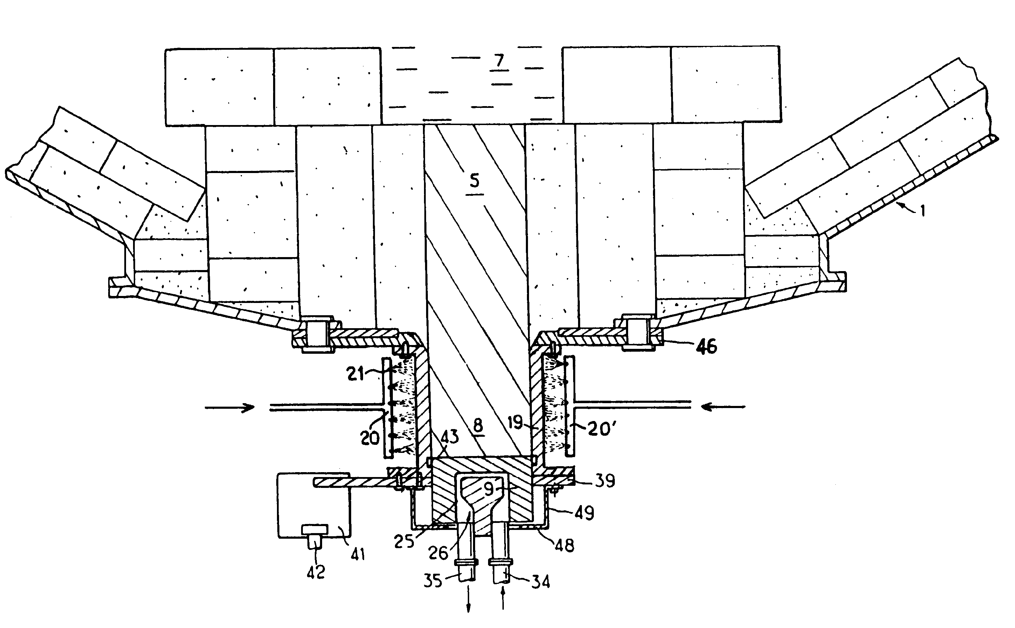

L'invention sera mieux comprise à la lecture de la description suivante, faite en référence à la figure unique annexée qui représente une coupe schématique verticale d'un four à arc à courant continu équipé d'un dispositif conforme à l'invention.

Pour une description plus complète de certains détails du dispositif de connexion électrique, représentés sur la figure mais non caractéristiques de l'invention, on pourra au besoin se reporter au document précité FR-A-2566984, ainsi qu'aux documents FR-A- 2577311 ou FR-A-2572873. On rappelle simplement que le fond du four est traversé par un corps métallique allongé ou barre 5 dont l'extrémité supérieure est en contact avec le métal en fusion 7. La partie terminale 8 de la barre 5 dépasse à l'extrémité du four et est entourée d'un manchon refroidi 19. Un embout 9 en matériau thermoconducteur refroidi prolonge la partie terminale 8.

L'embout 9 comporte une cavité 25 à l'intérieur de laquelle est disposé un système de refroidissement 26, relié à une entrée 34 et une sortie 35 de fluide de refroidissement.

Dans l'exemple représenté, une plaque 39 de connexion électrique est reliée par au moins une ailette 41 à un câble 42 lui-même relié à une borne d'une alimentation électrique. Des contacts 43, du type "ressort à lame" relient électriquement le manchon 19 à l'embout 9.

Il est précisé que la liaison électrique entre l'alimentation et l'embout 9 pourrait également être réalisée directement, sans connexion du manchon 19 à cette alimentation.

Il peut être prévu une couronne de butée 48, retenue sous l'embout 9 par des bras 49 fixés sous la plaque 39.

A sa partie supérieure, le manchon est maintenu solidaire de la carcasse du four, par exemple par fixation contre une plaque de fond 46, qui peut être une plaque en un matériau non conducteur, isolant ainsi l'électrode de la carcasse du four.

Conformément à l'invention, la circulation de fluide refroidissant assurant le refroidissement du manchon 19 est réalisée par des rampes 20, 20′ de gicleurs 21, qui projettent le fluide, par exemple de l'eau sous forte pression, sur la paroi externe du manchon, sous forme de fines gouttelettes. Ce type de refroidissement est dit "par pulvérisation". Ce fluide peut être mélangé à de l'air. On parle alors de refroidissement "par atomisation". Le nombre et la disposition des rampes et des gicleurs doivent être calculés de manière à assurer un refroidissement homogène du manchon sur tout son pourtour. Par ailleurs, comme dans les autres dispositifs de refroidissement précédemment envisagés pour ce type d'électrode, ce refroidissement doit être suffisamment intense pour éviter la fusion complète de la barre 5, et éviter notamment que le front de fusion ne parvienne jusqu'à l'embout 9. Ainsi, les infiltrations de métal liquide à l'extérieur du four peuvent être évitées.

L'ensemble du dispositif est enfermé dans une enveloppe (non représentée sur la figure) qui a pour rôle de l'isoler du milieu extérieur, ce qui évite la formation d'un brouillard autour du four, et de collecter et d'évacuer le fluide de refroidissement après son contact avec la barre.

Grâce à la présence du manchon, il est possible d'assurer un refroidissement très homogène de la barre. Le manchon a également un rôle de soutien de la barre, afin d'éviter que sa croûte solidifiée ne se rompe au-dessus du front de fusion et ne laisse échapper du métal liquide, si le refroidissement s'avère impuissant à la maintenir suffisamment rigide.

Le calcul de la quantité de chaleur à extraire du manchon et la détermination du nombre et des caractéristiques des gicleurs et du débit de fluide de refroidissement nécessaire à cet effet font partie des connaissances courantes de l'Homme de Métier qui est habituellement responsable du fonctionnement de ce type général d'électrode de soie. Grâce au contact plus intime entre le fluide et la surface à refroidir qu'il permet de réaliser, un tel dispositif permet d'évacuer des quantités de chaleur plus importantes que les dispositifs à circulation de fluide confinée utilisés jusqu'ici.

Bien entendu, l'invention ne se limite pas à l'exemple qui vient d'être décrit et représenté, dans lequel le manchon et la barre sont en contact constant. Le dispositif de refroidissement selon l'invention est également applicable aux électrodes décrites dans les documents FR-A-2 572 873 et FR-A-2 577 311, sur lesquelles un espace de séparation est ménagé à froid entre la barre et le manchon. Cet espace n'est comblé qu'après que la barre a subi une certaine dilatation après la mise en service de l'électrode. Ainsi les efforts exercés par le manchon sur la barre sont réduits, et la durée de vie du manchon est allongée.

De même l'embout 9 peut être refroidi lui aussi au moyen de gicleurs, ce refroidissement venant s'ajouter ou se substituer au refroidissement par circulation de fluide à l'intérieur de l'embout précédemment décrit et représenté.

## Revendications

1. Dispositif de connexion électrique, destiné à être placé en paroi d'un récipient ou four métallurgique contenant une masse métallique en fusion, dispositif comprenant :
- un corps métallique (5) de forme allongée, destiné à être implanté au travers de la paroi (2) du récipient de manière que l'une de ses extrémités soit mise au contact du métal en fusion (7) et que l'autre extrémité constitue une partie terminale proéminente (8) à l'extérieur du récipient et reliée à une borne d'une alimentation électrique ;
- un manchon (19), en matériau bon conducteur de la chaleur, monté concentriquement à la partie terminale proéminente (8) du corps (5) ;
- et des moyens de refroidissement du manchon (19) par un fluide de refroidissement, tel que de l'eau ;
dispositif caractérisé en ce que lesdits moyens de refroidissement du manchon sont constitués par au moins une rampe (20,20′) de gicleurs (21) projetant le fluide de refroidissement sur la paroi externe du manchon (19).

2. Dispositif selon la revendication 1, caractérisé en ce que le fluide de refroidissement est mélangé à un gaz, tel que de l'air.

## Patentansprüche

1. Elektrische Kontaktvorrichtung, welche in die Wand eines metallurgischen Gefässes oder eines metallurgischen Ofens eingebracht wird, welcher eine in der Schmelze befindliche metallische Masse enthält, wobei diese Vorrichtung folgendes aufweist:
- einen metallischen Körper (5) länglicher Form, welcher die Wand (2) des Gefässes so durchquert, daß eines seiner Enden mit dem in der Schmelze befindlichen Metall (7) in Berührung tritt, während das andere Ende einen an der Außenseite des Gefässes herausragenden Endabschnitt (8) bildet und an die Klemme einer elektrischen Speisequelle angeschlossen ist;
- eine Muffe (19) aus einem gut wärmeleitenden Material, welche konzentrisch zu dem herausragenden Endabschnitt (8) des Körpers (5) montiert ist;
- sowie Mittel für die Abkühlung der Muffe (19) mit Hilfe einer Kühlflüssigkeit, wie zum Beispiel Wasser;
**dadurch gekennzeichnet, daß**
diese Mittel für die Abkühlung der Muffe aus mindestens einer Rampe (20, 20') von Spritzdüsen (21) bestehen, welche die Kühlflüssigkeit auf die Außenwand der Muffe (19) aufspritzen.

2. Vorrichtung nach Anspruch 1,
**dadurch gekennzeichnet, daß**
die Kühlflüssigkeit mit einem Gas, wie zum Beispiel Luft, vermischt wird.

## Claims

1. Electric connection device intended to be placed in the wall of a metallurgical container or furnace containing a molten metal mass, said device comprising:
an elongated metal body (5) intended to be inserted in and extend through the wall (2) of the container so that one of its ends is put in contact with the molten metal (7) and the other end constitutes an end part (8) projecting outside the container and connected to a terminal of an electric supply;
a sleeve (19) composed of a material which is a good heat conductor mounted concentrically with the projecting end (8) part of the body (5);
and means for cooling the sleeve (19) with a cooling fluid, such as water;
said device being characterized in that said sleeve cooling means comprise at least one row (20,20′) of nozzles (21) which spray the cooling fluid onto the outer wall of the sleeve (19).

2. Device according to claim 1, characterized in that the cooling fluid is mixed with a gas, such as air.
